# EUROPEAN PATENT APPLICATION

(11) **EP 0 932 327 A1**
(43) Date of publication of application: **28.07.1999**
(21) Application number: 98936703.2
(22) Date of filing: 07.08.1998
(51) Int. Cl.: H05B 6/74

(54) **HEATER UTILIZING MICROWAVE AND BONDING METHOD USING IT**

(30) Priority: 12.08.1997 JP 21724297
(71) Applicant: MATSUSHITA ELECTRIC INDUSTRIAL CO., LTD., Kadoma-shi, Osaka 571-8501 (JP)
(72) Inventor: TAKEDA, Mamoru, Soraku-gun, Kyoto 619-0237 (JP); HORIUCHI, Makoto, Sakurai-shi, Nara 633-0062 (JP); HOCHI, Akira, Nara-shi, Nara 631-0004 (JP); SAJI, Tasaburo, Gamou-gun, Shiga 529-1551 (JP); SAKAI, Ryozo, Nara-shi, Nara 631-0806 (JP); YAMAMOTO, Kenji, Kouga-gun, Shiga 520-3252 (JP)
(74) Representative: Grünecker, Kinkeldey, Stockmair & Schwanhäusser Anwaltssozietät
(86) International application number: JP9803533
(87) International publication number: WO9908487

(57) **Abstract**

Materials transparent for microwaves cannot be heated to high temperatures by using conventional microwave heating apparatuses and conventional bonding methods using such apparatuses. To solve this problem, the present invention discloses a microwave heating apparatus and a method of bonding objects thereby, being characterized as described below. A susceptor 10 is disposed at a predetermined position in an applicator 2, and at the passing-through portion of the susceptor 10, two ceramic materials 13 and an intermediate frit material 14 are disposed so that the intermediate frit material 14 is sandwiched between the two ceramic materials 13. In addition, at the position of the susceptor 10, the distance between a magnetron oscillator and a reflection plate with an adjustment rod is adjusted so that a microwave from the magnetron oscillator can resonate. In this condition, the susceptor 10 absorbs the microwave from the magnetron oscillator and generates radiation heat on the basis of the energy of the absorbed microwave to heat the intermediate frit material 14 to a high temperature, thereby to melt it. The melted intermediate frit material is used as a bonding material to bond the two ceramic materials 13.

## Description

### TECHNICAL FIELD

The present invention relates to a microwave heating apparatus and a method of bonding objects thereby

### BACKGROUND OF THE INVENTION

A method wherein a glass material is melted by an electric furnace, and the melted glass material is bonded to a metal; a method wherein a glass material and a metal are heated and melted by a burner, and the melted glass material and metal are bonded to each other; and the like are used generally.

Furthermore, as a special bonding method, a method of ceramic-to-ceramic bonding is used wherein an intermediate ceramic sealing material is sandwiched between two ceramic materials, the intermediate ceramic sealing material is directly heated by a microwave, and the intermediate ceramic sealing material is used as a bonding material to bond the two ceramic materials (Bonding Technology Data Handbook depending on Type of Material, by Science Forum Inc., Vol. 2 (Ceramic Material Bonding), Page 14).

Furthermore, when a metal is bonded to a ceramic material for example, the bonding is carried out occasionally in an Ar gas atmosphere to prevent the metal from being oxidized. In this case, a glass material to be melted and used as an intermediate material is sandwiched between the metal and the ceramic material, the metal is heated by Ar arcs or high-frequency heating to melt the glass material, and the melted glass material is used as a bonding material to bond the metal and the ceramic material.

In a similar way, when a material to be sealed in such as a metal is fed in a glass tube, one end of which has been sealed in advance, and the glass tube is sealed at a predetermined portion, the operation steps of feeding the material to be sealed in into the glass tube and sealing the glass tube are occasionally carried out in an Ar atmosphere to prevent the material to be sealed in from being oxidized.

However, when ceramic materials are bonded to each other as described above, the bonding is carried out in a condition wherein an intermediate ceramic sealing material is sandwiched between the two ceramic materials. Since an oxide constituting the intermediate ceramic sealing material is transparent for a microwave, the intermediate ceramic sealing material cannot be heated sufficiently, and the two ceramic materials cannot be bonded to each other, even if the intermediate ceramic sealing material is heated by using the microwave, unless a coupling material having a high resistance is included in the intermediate ceramic sealing material.

Furthermore, when no metal is present at a bonding portion, that is, when two objects to be bonded are not metals, just as in the above-mentioned case of the ceramic-to-ceramic bonding, the two objects to be bonded cannot be bonded, even if the bonding portion is heated by microwave dielectric heating.

Furthermore, when a material to be sealed in such as a metal is fed in a glass tube, one end of which has been sealed in advance, and the glass tube is sealed at a predetermined position in an Ar gas atmosphere, if the glass tube is made of glass having a low melting point just as in the case of borosilicate glass or lead glass, the glass tube having such a low melting point can be melted and sealed by an electric furnace. However, if the glass tube is made of glass having a high melting point just as in the case of quartz glass, the glass tube having such a high melting point cannot be melted unless it is heated to about 2000°C or more. In order to melt the glass tube, it is necessary to use a special electric furnace capable of heating the glass tube to about 2000°C or more. Therefore, in order to carry out the steps of feeding a material to be sealed in into such a glass tube having a high melting point and sealing the glass tube by using an electric furnace, such a special electric furnace must be provided, and an installation for accommodating the special electric furnace is required in an Ar atmosphere. Consequently, such an installation becomes large in size.

Furthermore, when a ceramic material having a high melting point is melted, a special electric furnace capable of heating the ceramic material to about 2000°C or more is required just as in the above-mentioned case of melting a glass tube made of quartz glass having a high melting point.

When a tungsten heater or a carbon heater is used instead of the above-mentioned special electric furnace as a heat source, the heat source can heat and melt a local portion of the glass tube and the like. Since the heat source generates a large amount of heat, it must be cooled. However, since the amount of heat generated by the heat source is large, it is very difficult to cool the heat source. In addition, energy loss generated at the time of the cooling becomes significant. For this reason, when such a tungsten heater or carbon heater is used as a heat source, its energy efficiency becomes extremely low.

When Ar arcs or a burner is used to heat objects to be bonded and/or an intermediate material, the temperature around the heated portion rises significantly. Therefore, when the steps of feeding a material to be sealed in such as a metal into a glass tube, one end of which has been sealed in advance, and of sealing the glass tube are carried out in a hermetically sealed container such as a glove box or the like charged with Ar gas to prevent the material to be sealed in from being oxidized, the temperature in the hermetically sealed container rises significantly when the glass tube is heated by Ar arcs or the like. It is thus necessary to control the temperature and pressure in the hermetically sealed container.

### DESCLOSURE OF THE INVENTION

In consideration of the problem that the above-mentioned conventional microwave heating apparatus and the method of bonding objects by using the apparatus cannot heat materials transparent for microwaves, one object of the present invention is to provide a microwave heating apparatus capable of heating materials transparent for microwaves to high temperatures and to provide a method of bonding objects by using the apparatus.

Furthermore, another object of the present invention is to provide a microwave heating apparatus capable of heating materials transparent for microwaves to high temperatures and to provide a method of bonding objects by using the apparatus in an atmosphere of a rare gas such as Ar gas or in a substantially vacuum condition.

A microwave heating apparatus of the present invention comprises a microwave generating means for generating a microwave and a heat generating means for absorbing said microwave from said microwave generating means and for generating heat on the basis of said absorbed microwave and, wherein said heat generating means is disposed to substantially cover a predetermined position.

A method of the present invention of bonding objects to be bonded is that with using a microwave heating apparatus of the present invention, objects to be bonded are disposed at a predetermined distance position from said heat generating means of said apparatus or at a position covered by said heat generating means, and said objects are bonded by using the heat from said heat generating means.

### BRIEF DESCRIPTION OF THE DRAWINGS

FIG. 1 is a side view of a microwave heating apparatus in accordance with the present invention;
FIG. 2 is a side view of the glove box of a microwave heating apparatus in accordance with embodiment 1 of the present invention;
FIG. 3 is a side view of the glove box of a microwave heating apparatus in accordance with embodiment 2 of the present invention;
FIG. 4 shows the arrangement of a quartz glass tube, a metal rod and a graded glass piece when the metal rod is bonded to and sealed in the quartz glass tube by using a microwave heating apparatus in accordance with embodiment 3 of the present invention.
FIG. 5 shows a status where the generation position of the standing wave is adjusted by using the reflection plate in an embodiment of the present invention.
FIG. 6 shows a status where the generation position of the standing wave is adjusted by using the reflection plate in an embodiment of the present invention.
FIG. 7 shows a status where the susceptor is cooled in an embodiment of the present invention.
FIG. 8 shows a status where the susceptor is cooled in an embodiment of the present invention.

- 1: glove box
- 2: applicator
- 3: magnetron oscillator
- 4: power supply unit
- 5: isolator
- 6: stub tuner
- 7: detector
- 8: waveguide
- 9: microwave transmission window
- 10: susceptor
- 11: thermal insulating material
- 12: reflection plate with adjustment rod
- 13: ceramic material
- 14: intermediate frit material
- 15: quartz glass tube
- 16: through hole
- 17: exhaust pipe
- 18: metal rod
- 19: graded glass piece
- 20: valve for closing
- 21: valve for adjusting
- 22: pump
- 23: pipe
- 24: nozzle

### BEST MODE FOR CARRYING OUT THE INVENTION

Embodiments of the present invention will be described below referring to the accompanying drawings.

### (Embodiment 1)

First, the structure of a microwave heating apparatus in accordance with embodiment 1 of the present invention will be described below.

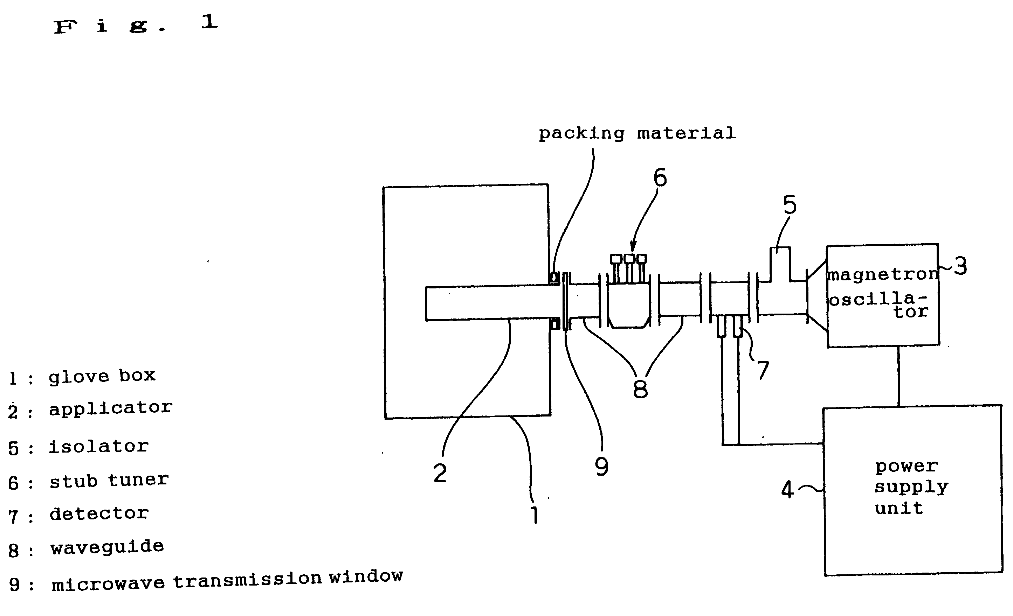

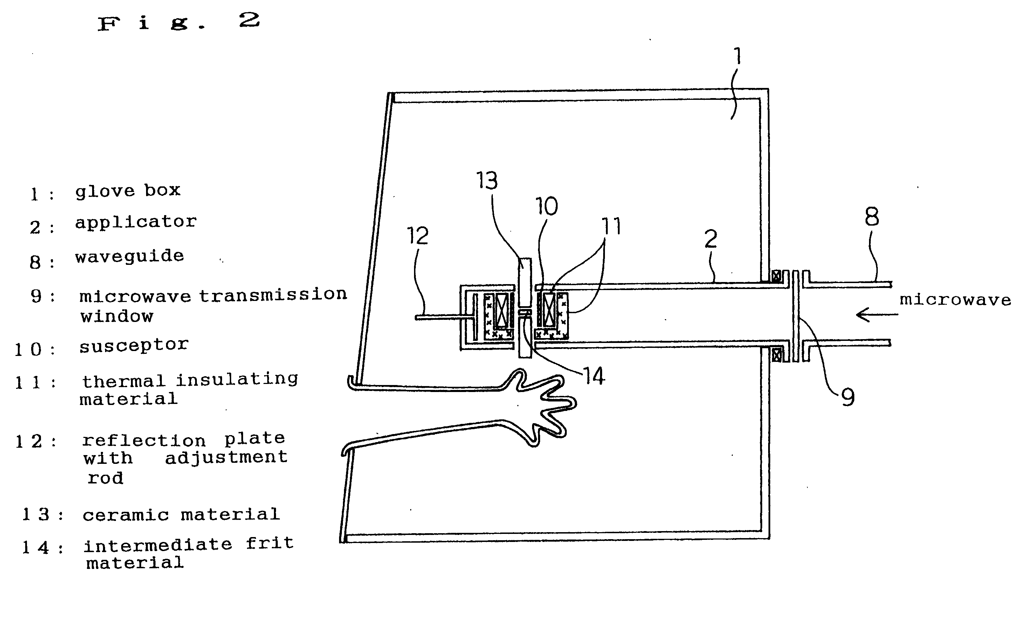

FIG. 1 is a side view of the microwave heating apparatus in accordance with embodiment 1 of the present invention. FIG. 2, being supplementary to FIG. 1, is a side view of the glove box 1 of the microwave heating apparatus.

The numeral 1 designates a substantially hermetically sealed chamber, that is, a glove box for substantially blocking the entry of outside air. In embodiment 1, the glove box 1 is charged with a predetermined amount of Ar gas. The Ar gas charged in the glove box 1 is circulated by a purifier to remove the moisture content in the Ar gas as much as possible, thereby to reduce the dew-point of the Ar gas. The numeral 2 designates an applicator, the major portion of which is disposed in the glove box 1. At the applicator 2, a microwave is introduced from a magnetron oscillator 3 described later into the glove box 1 via a waveguide 8 described later, and a standing wave of the microwave is generated to resonate the microwave. The numeral 3 designates the magnetron oscillator for generating a microwave. The numeral 4 designates a power supply unit for supplying electric power to the magnetron oscillator 3. The numeral 5 designates an isolator. The isolator 5 prevents the microwave from the magnetron oscillator 3 from returning to the magnetron oscillator 3 after the microwave is reflected by a reflection plate 12 with an adjustment rod described later and the like. The numeral 6 designates a stub tuner. This device performs tuning so that the energy of the microwave generated by the magnetron oscillator 3 can be supplied efficiently to the applicator 2. The numeral 7 is a detector for detecting energy supplied to the applicator 2 and energy reflected to the magnetron oscillator 3. The magnetron oscillator 3, the power supply unit 4, the isolator 5, the stub tuner 6 and the detector 7 are provided outside the glove box 1. The numeral 8 designates a waveguide for guiding the microwave from the magnetron oscillator 3 to the applicator 2. The numeral 9 designates a microwave transmission window disposed at the opening of the waveguide 8 on the side of the applicator 2 and formed of a high-purity alumina plate for allowing the microwave from the magnetron oscillator 3 to pass through. The waveguide 8 is connected to the applicator 2 via the microwave transmission window 9. Via a Teflon gasket packing material, the microwave transmission window 9 at the connection portion is disposed to close the openings of the waveguide 8 and the applicator 2, which are provided in face-to-face relationship. Therefore, the passage of the microwave from the magnetron oscillator 3 is shut off from the outside air. The numeral 10 designates a partially passing-through cylindrical susceptor (microwave absorbing material). This susceptor 10 is disposed at the resonance position of the microwave inside the applicator 2 in the glove box 1 so as to substantially cover a predetermined area as shown in FIG. 2, and is used as a means for absorbing the microwave from the magnetron oscillator 3 and for generating radiation heat on the basis of the energy of the absorbed microwave. The susceptor 10 is made of silicon carbide (SiC). The numeral 11 designates a thermal adiabatic material made of zirconia. This adiabatic material is disposed around the susceptor 10 inside the applicator 2 in the glove box 1 as shown in FIG. 2 to thermally adiabate the susceptor 10. In addition, an alumina block is also disposed as a thermal adiabatic material 11 so as to cover the thermal adiabatic material 11 made of zirconia, thereby to thermally adiabate the susceptor 10. The numeral 12 designates a reflection plate with an adjustment rod. As shown in FIG. 2, the reflection plate 12 with the adjustment rod is disposed at one end of the applicator 2, that is, at the end of the applicator 2 on the opposite side of the magnetron oscillator 3, and is used to adjust the distance to the magnetron oscillator 3. By the movement of the reflection plate 12 with the adjustment rod, the distance between the reflection plate 12 with the adjustment rod and the magnetron oscillator 3 is changed, the microwave becomes a standing wave inside the applicator 2, and the energy of the microwave from the magnetron oscillator 3 is concentrated on the susceptor 10.

Next, the operation of the microwave heating apparatus in accordance with embodiment 1 of the present invention will be described below.

In the explanation of embodiment 1, the operation of the microwave heating apparatus will be described below when two ceramic materials 13 are bonded to each other in the glove box 1 charged with a predetermined amount of Ar gas.

When the two ceramic materials 13 are bonded to each other, they are disposed so that they are arranged substantially perpendicular to the straight line extending from the susceptor 10 to the magnetron oscillator 3 and so that the mutual bonding portions of the ceramic materials 13 are covered with the susceptor 10 at the passing-through portion of the susceptor 10 as shown in FIG. 2. In addition, an intermediate frit material 14 for bonding the two ceramic materials 13 is disposed between the two ceramic materials 13. In other words, the ceramic materials 13 and the intermediate frit material 14 are disposed so that the intermediate frit material 14 is sandwiched between the two ceramic materials 13. CaO-Al₂O₃ having a melting point of about 1000 to 1500°C is used as the intermediate frit material 14.

The magnetron oscillator 3 generates a microwave having a predetermined amount of energy. The microwave passes the waveguide 8, passes through the microwave transmission window 9, is introduced into the applicator 2, and is absorbed by the susceptor 10 comprising two segments. The reflection plate 12 with the adjustment rod has been adjusted so that the resonance portion of the microwave is aligned with the position of the susceptor 10, that is, so that the energy of the microwave becomes maximum at the position of the susceptor 10.

That is FIG.5 shows a status before the adjustment and FIG.6 shows a status where the maximum position of the electric field intensity 100 of a standing wave is disposed at a center of the susceptor 10.

Next, the susceptor 10 generates radiation heat on the basis of the energy of the absorbed microwave. The temperature of the intermediate frit material 14 is raised to a predetermined temperature, that is, the melting point of the intermediate frit material 14, in a short time of several seconds to several minutes. The intermediate frit material 14 is melted and used as a bonding material to bond the two ceramic materials 13.

In a conventional case wherein a microwave is directly absorbed by the intermediate frit material 14 to melt the intermediate frit material 14 without using the susceptor 10, it has been assumed that the intermediate frit material 14 is required to include an inorganic coupling agent for absorbing the microwave. In the case of embodiment 1, however, the intermediate frit material 14 is made of CaO-Al₂O₃ as described above and does not include any inorganic coupling agent. Nevertheless, since the intermediate frit material 14 in accordance with embodiment 1 absorbs radiation heat from the susceptor 10 and is heated to a high temperature, the frit material 14 can be melted even when the material does not include any inorganic coupling agent.

In embodiment 1, the microwave transmission window 9 is formed of a high-purity alumina plate. However, the microwave transmission window 9 may be formed of a high-purity Teflon plate.

In addition, in embodiment 1, the thermal adiabatic material 11 made of zirconia is used, and the alumina block is also disposed. In the present invention, however, the zirconia material and the alumina block for the thermal adiabatic materials 11 used as thermal adiabatic means in embodiment 1 may be disposed at places interchanged from each other. Furthermore, only the zirconia material or the alumina block may be used for the thermal adiabatic material 11 as the thermal adiabatic means.

Additionally, in embodiment 1, the intermediate frit material 14 is made of CaO-Al₂O₃. In the present invention, however, CaO-Al₂O₃-SiO₃ or MgO-Al₂O₃-SiO₃, not including any inorganic coupling material, may be used for the intermediate frit material 14 used as a sealing material to be melted.

Moreover, in embodiment 1, the intermediate frit material 14 is used and melted by radiation heat from the susceptor 10, and the ceramic materials 13 sandwiching the intermediate frit material 14 are bonded to each other by using the melted intermediate frit material 14. In the present invention, however, without using the intermediate frit material 14, the connection portions of the two ceramic materials 13 used as materials to be bonded may be sintered by radiation heat from the susceptor 10 to bond the ceramic materials 13 to each other.

### (Embodiment 2)

The structure and operation of a microwave heating apparatus in accordance with embodiment 2 of the present invention will be described below.

A main difference between embodiment 2 and embodiment 1 is that the objects to be bonded by using the above-mentioned heating apparatus of embodiment 1 differ from those to be bonded by the heating apparatus of embodiment 2. In the explanation of embodiment 2, only matters different from those in embodiment 1 will be described below.

In the explanation of embodiment 2, the operation of a microwave heating apparatus is described, when a quartz glass tube 15 sealed on one side and charged with a metal halide having a high vapor pressure is melted at a predetermined position with the tube kept charged with the metal halide, and when the melted portion thereof is bonded to hermetically seal the quartz glass tube 15.

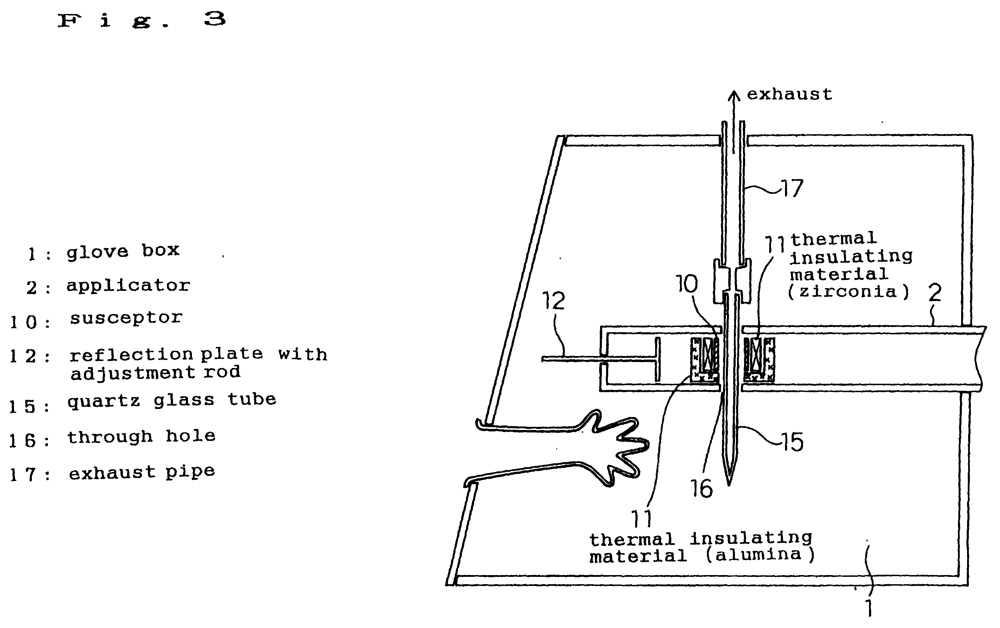

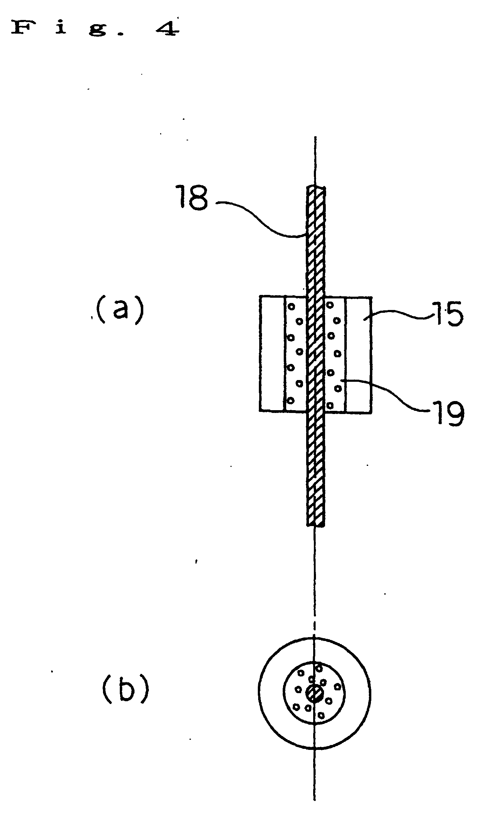

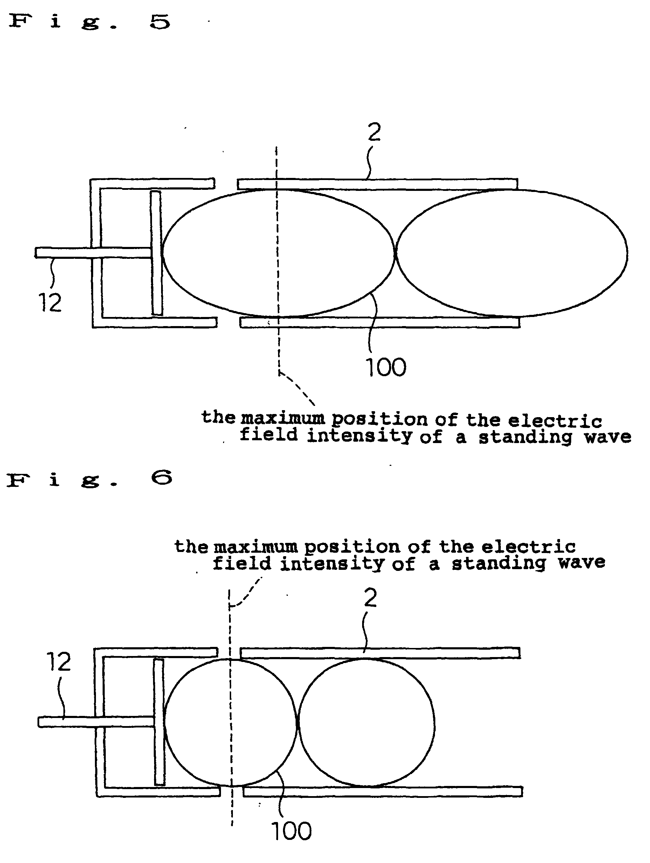

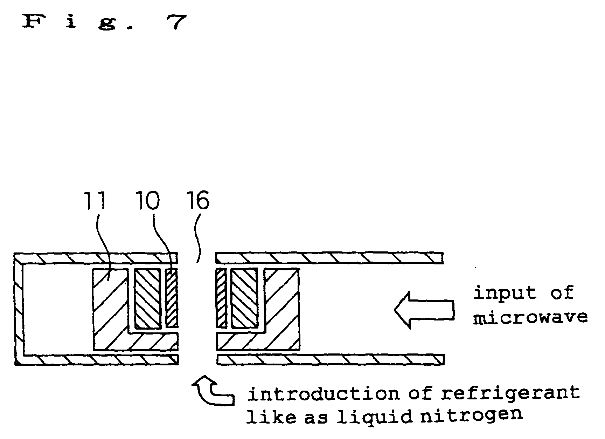

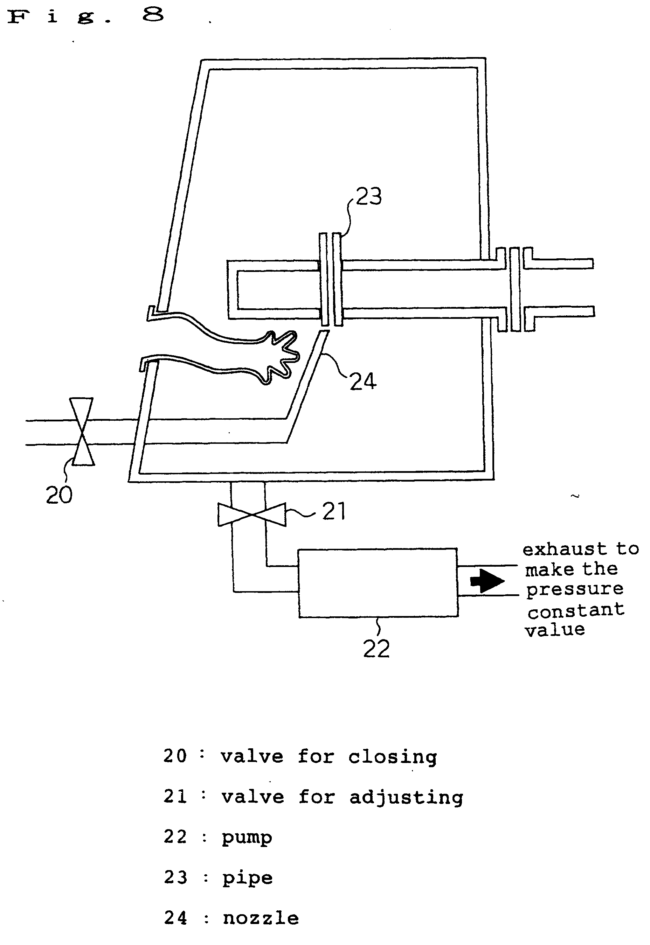

FIG. 3 is a side view of the glove box 1 of the microwave heating apparatus in accordance with embodiment 2 of the present invention.

In the microwave heating apparatus in accordance with embodiment 2 of the present invention, the applicator 2 has a through hole 16 passing through in the vertical direction in FIG. 3. In addition, the susceptor 10 is disposed so that the passing-through portion of the susceptor 10 coincides with the through hole 16. Furthermore, the microwave heating apparatus in accordance with embodiment 2 of the present invention is provided with an exhaust pipe 17 disposed at a predetermined position above the through hole 16.

In a condition wherein the metal halide to be hermetically sealed in the quartz glass tube 15 is prevented from being oxidized inside the glove box 1 charged with Ar gas, the metal halide is fed into the quartz glass tube 15 having been sealed in advance on one side thereof, and the quartz glass tube 15 is inserted into the through hole 16 with the sealed portion thereof directed downward. With the metal halide kept included, the quartz glass tube 15 is disposed so that its predetermined portion to be sealed is positioned at the portion passing through the susceptor 10. Next, the unsealed upper portion of the quartz glass tube 15 is connected to the exhaust pipe 17. The gas inside the quartz glass tube 15 is exhausted under reduced pressure by a vacuum pump disposed outside the glove box 1 and connected to the exhaust pipe 17.

After this, the magnetron oscillator 3 generates a microwave having a predetermined amount of energy. The microwave passes the waveguide 8, passes through the microwave transmission window 9, is introduced into the applicator 2, and is absorbed by the susceptor 10.

The susceptor 10 generates radiation heat on the basis of the energy of the absorbed microwave, the quartz glass tube 15 is softened and melted at the predetermined portion, and its softened and melted portion is bonded. When the quartz glass tube 15 is softened and melted, its softened and melted portion tends to hang down by its own weight. Therefore, the energy of the microwave generated by the magnetron oscillator 3 must be set properly, and/or the time of supplying the energy to the susceptor 10 must be set at an appropriate time. By properly controlling the energy of the microwave generated by the magnetron oscillator 3 and/or the time of supplying the energy to the susceptor 10, the quartz glass tube 15 can be sealed in a short time.

By adjusting the clearance between the susceptor 10 and the quartz glass tube 15, the amount of heat to be applied to the quartz glass tube 15, that is, the temperature distribution of the quartz glass tube 15 can be adjusted. For example, when the diameter of the through hole 16 in the applicator 2 is increased, and in accordance with this increase, the diameter of the passing-through portion of the susceptor 10 is also increased, the high temperature area of the quartz glass tube 15 becomes smaller and limited. When the clearance between the susceptor 10 and the quartz glass tube 15 is decreased, the high temperature area of the quartz glass tube 15 becomes larger. Therefore, by adjusting the clearance between the susceptor 10 and the quartz glass tube 15, the quartz glass tube 15 can be heated locally, and thermal effects to portions other than the heated portion can be reduced.

In the Ar gas atmosphere in the glove box 1, an Ar arc generating Ar burner or the like has been used conventionally to hermetically seal the quartz glass tube 15. When such an Ar burner is used in the glove box 1 in this way, workability is lowered. In addition, since the temperature of the entire glove box 1 increases, the pressure therein also increases. It is thus necessary to perform work efficiently to ensure safety. Furthermore, when the quartz glass tube 15 is melted and bonded by using the Ar burner, large amounts of silica powder of quartz and very thin thread-like quartz are generated, and these must be removed. However, it is extremely difficult to perform the removal inside the glove box 1.

In the microwave heating apparatus in accordance with embodiment 2 of the present invention, however, the quartz glass tube 15 can be easily hermetically sealed inside the glove box 1 charged with Ar gas without using an Ar burner as described above.

Consequently, by using the microwave heating apparatus in accordance with embodiment 2 of the present invention, the above-mentioned metal halide having a high vapor pressure can easily be hermetically sealed in the quartz glass tube 15, and materials extremely undesired to be oxidized can easily be bonded to and hermetically sealed in the quartz glass tube 15.

In embodiment 2, the material to be hermetically sealed in the quartz glass tube 15 is a metal halide. However, the material to be hermetically sealed in the quartz glass tube 15 may be mercury, metal and/or metal halide.

### (Embodiment 3)

The structure and operation of a microwave heating apparatus in accordance with embodiment 3 of the present invention will be described below.

A main difference between embodiment 3 and embodiment 1 or 2 is that the objects to be bonded by using the above-mentioned heating apparatuses differ from those to be bonded by the heating apparatus of embodiment 3. In the explanation of embodiment 3, only matters different from those in embodiment 1 or 2 will be described below.

In the explanation of embodiment 3, the operation of the microwave heating apparatus is described below when a cylindrical metal rod 18 made of Mo, W or the like undesired to be oxidized is bonded to and sealed in a quartz glass tube 15.

FIGS. 4a and 4b are views showing the arrangement of the quartz glass tube 15, the metal rod 18 and a graded glass piece 19 when the metal rod 18 undesired to be oxidized is bonded to and sealed in the quartz glass tube 15 by using the microwave heating apparatus in accordance with embodiment 3 of the present invention. The graded glass piece 19 is a material to be used to bond the metal rod 18 to the quartz glass tube 15. Its thermal expansion coefficient varies gradually depending on its area; the thermal expansion coefficient on its one side making contact with the quartz glass tube 15 is (1 to 8) × 10⁻⁷/°C, and the thermal expansion coefficient on its other side making contact with the metal rod 18 is (10 to 100) × 10⁻⁷/°C. FIG. 4a is a sectional side view showing the arrangement of the quartz glass tube 15, the metal rod 18 and the graded glass piece 19 described above. FIG. 4b is a plan view showing the arrangement of the quartz glass tube 15, the metal rod 18 and the graded glass piece 19.

First, in the glove box 1 charged with Ar gas, together with the metal rod 18, the graded glass piece 19 is disposed in the quartz glass tube 15 as shown in FIG. 4a such that its one side having a smaller thermal expansion coefficient makes contact with the quartz glass tube 15 and such that its other side having a larger thermal expansion coefficient makes contact with the metal rod 18. Next, as shown in FIG. 3, the quartz glass tube 15 provided with the metal rod 18 and the graded glass piece 19 is disposed at the passing-through portion of the susceptor 10 of the microwave heating apparatus in accordance with embodiment 3 of the present invention.

The microwave having a predetermined amount of energy and delivered from the magnetron oscillator 3 is absorbed by the susceptor 10. The susceptor 10 generates radiation heat on the basis of the energy of the absorbed microwave to soften and melt the graded glass piece 19. By using the graded glass piece 19 as a bonding material, the metal rod 18 is bonded to and sealed in the quartz glass tube 15.

In embodiment 3, the cylindrical metal rod 18 is used as a metal member of the present invention. However, the metal member of the present invention is not limited to the cylindrical metal rod 18. A prism-shaped metal rod or a plate-like metal piece may be used.

In the present invention, the magnetron oscillator 3 is used as a microwave generating means, the susceptor 10 is used as a heat generating means, the thermal adiabatic material 11 is used as a thermal adiabatic means, and the glove box 1 is used as a sealing chamber. In addition, as a sealing material to be melted, the intermediate frit material 14 is used in embodiment 1, and the graded glass piece 19 is used in embodiment 3. As an object or objects to be bonded, the two ceramic materials 13 are used in embodiment 1, the quartz glass tube 15 is used in embodiment 2, and the quartz glass tube 15 and the metal rod 18 are used in embodiment 3.

Furthermore, in embodiments 1, 2 and 3, the glove box 1 is charged with a predetermined amount of Ar gas only. In the present invention, however, the glove box 1 used as a hermetic sealing chamber may be charged with a predetermined amount of a rare gas only, other than Ar gas.

Furthermore, in embodiments 1, 2 and 3, the two ceramic materials 13, the quartz glass tube 15, or the quartz glass tube 15 and the metal rod 18, used as an object or objects to be bonded, and the graded glass piece 19 used as a sealing material to be melted are disposed at their predetermined positions. In the present invention, however, the user of the microwave heating apparatus of the present invention may manually secure the object(s) to be bonded and/or the sealing material to be melted so that they are disposed at their predetermined positions by using the glove of the glove box 1 used as a sealing chamber. In short, the object(s) to be bonded and/or the sealing material to be melted should only be disposed at their predetermined positions.

Furthermore, in embodiments 1, 2 and 3, the susceptor 10 has a partially passing-through cylindrical shape so as to substantially cover the predetermined position. However, the susceptor 10 used as a heat generating means of the present invention may have a plate-like shape or a shape of a vertically split cylinder. In short, the susceptor 10 used as a heat generating means of the present invention should only be a means for absorbing the microwave from the magnetron oscillator 3 used as a microwave generating means and for generating radiation heat on the basis of the energy of the absorbed microwave. The shape is thus not limited to a cylindrical shape. However, if the susceptor 10 used as the heat generating means of the present invention is not cylindrical, the object(s) to be bonded and/or the sealing material to be melted must be disposed at a predetermined distance position from the susceptor 10 wherein a predetermined amount of heat can be absorbed from the susceptor 10.

Furthermore, in the above-mentioned explanations of embodiments 1, 2 and 3, the glove box 1 of the microwave heating apparatus of the present invention is charged with Ar gas, and the two ceramic materials 13 are bonded to each other in the Ar gas atmosphere, or the quartz glass tube 15 is hermetically sealed, or the metal rod 18 is bonded to and sealed in the quartz glass tube 15. In the microwave heating apparatus of the present invention, however, it is needless to say that the apparatus can be used even when the glove box 1 of the apparatus used as a hermetically sealed chamber is charged with a rare gas such as Ar gas, and metals of Mo, W and the like undesired to be oxidized are bonded metal-to-metal in the rare gas atmosphere. Moreover, in the present invention, the above-mentioned metal-to-metal bonding may be carried out in a substantially vacuum condition in the glove box 1 used as a hermetically sealed chamber. Additionally, in the present invention, if the object to be bonded is not made of a material like a metal undesired to be oxidized but made of a material like the ceramic material 13 not required to be bonded in the atmosphere of a rare gas such an Ar gas or in a substantially vacuum condition, the object to be bonded is not required to be bonded in the atmosphere of the rare gas such as Ar gas or in the substantially vacuum condition.

Furthermore, in the present invention, the objects to be bonded can be bonded properly by controlling the energy of the microwave generated by the magnetron oscillator 3, the shape of the susceptor 10 and/or the size of the thermal adiabatic material 11.

As another embodiment of the present invention is such method can be devised that the susceptor 10 is cooled every when one set of the objects to be bonded is bonded.

That is one set of the objects is inserted into the through hole 16 and bonded and then the bonded objects are picked out and such place which becomes considerably high temperature on account of the thermal adiabatic material 11, is cooled by refrigerant like as liquid nitrogen to become normal temperature. And then another one set of the objects is inserted and bonded.

FIG.8 shows one exmaple of the cooling method. A pipe 23 is inserted into the through hole 16 when cooling, and the above refrigerant or cool window goes through the pipe 23. Thus the susceptor 10 which becomes too high temperature is cooled. For sending the refrigerant or cool window to the pipe 23, a nozzle 24 is disposed direct under the pipe 23 and the refrigerant and so on is sent by using a valve for closing. Further the pressure in the globe box 1 is made a constant value by using a rotary pump 22 and an adjusting pressure valve 21.

The reason why the susceptor is cooled every when the objects are bonded is that the heating apparatus of the present invention has high heat adiabatic efficiency and then when the sample is exchanged, the exchanging operation is difficult if the susceptor is too high temperature.

### INDUSTRIAL APPLICABILITY

As clearly understood from the above descriptions, the present invention can provide a microwave heating apparatus capable of heating materials transparent for microwaves to high temperatures, and can provide a method of bonding objects by using the apparatus.

Furthermore, the present invention can provide a microwave heating apparatus capable of heating materials transparent for microwaves to high temperatures in an atmosphere of a rare gas, such as Ar gas or in a substantially vacuum condition, and can also provide a method of bonding objects by using the apparatus.

Consequently, ceramic-to-ceramic bonding, sealing of a quartz glass tube, metal-to-metal bonding of metals having high melting points and undesired to be oxidized, bonding of a metal to a ceramic material or a quartz glass tube, and the like can easily be carried out in an atmosphere of a rare gas, such as Ar gas or in a substantially vacuum condition.

## Claims

1. A microwave heating apparatus comprising a microwave generating means for generating a microwave and a heat generating means for absorbing said microwave from said microwave generating means and for generating heat on the basis of said absorbed microwave and, wherein said heat generating means is disposed to substantially cover a predetermined position.

2. A microwave heating apparatus in accordance with claim 1, wherein said heat generating means has a tubular shape.

3. A microwave heating apparatus in accordance with claim 1 or 2, comprising a thermal adiabatic means disposed around said heat generating means to thermally adiabate said heat generating means.

4. A microwave heating apparatus in accordance with one of claims 1 to 3, comprising a hermetically sealed chamber for substantially blocking the entry of outside air, said hermetically sealed chamber having said heat generating means and said thermal adiabatic means.

5. A microwave heating apparatus in accordance with one of claims 1 to 4, wherein said heat generating means is made of SiC.

6. A microwave heating apparatus in accordance with one of claims 3 to 5, wherein said thermal adiabatic means is made of zirconia and/or alumina.

7. A method of bonding objects to be bonded by using a microwave heating apparatus, wherein a microwave heating apparatus in accordance with one of claims 1 to 6 is used, objects to be bonded are disposed at a predetermined distance position from said heat generating means of said apparatus or at a position covered by said heat generating means, and said objects are bonded by using the heat from said heat generating means.

8. A method of bonding objects to be bonded by using a microwave heating apparatus, wherein a microwave heating apparatus in accordance with one of claims 1 to 6 is used, a sealing material to be melted is disposed at a predetermined distance position from said heat generating means of said apparatus or at a position covered by said heat generating means, or objects to be bonded are disposed to sandwich said sealing material to be melted, and said sealing material is melted by using the heat from said heat generating means, and then said objects are bonded by using said sealing material having been melted.

9. A method of bonding objects to be bonded by using a microwave heating apparatus, wherein a microwave heating apparatus in accordance with one of claims 4 to 6 is used, said hermetically sealed chamber of said apparatus is filled with a predetermined amount of a rare gas or substantially vacuumed, objects to be bonded are disposed at a predetermined distance position from said heat generating means of said heating apparatus or at a position covered by said heat generating means in said hermetically sealed chamber, and said objects are bonded by using the heat from said heat generating means.

10. A method of bonding objects to be bonded by using a microwave heating apparatus, wherein a microwave heating apparatus in accordance with one of claims 4 to 6 is used, said hermetically sealed chamber of said apparatus is filled with a predetermined amount of a rare gas or substantially vacuumed, a sealing material to be melted is disposed at a predetermined distance position from said heat generating means of said heating apparatus or at a position covered by said heat generating means in said hermetically sealed chamber, or objects to be bonded are disposed to sandwich said sealing material to be melted, and said sealing material is melted by using the heat from said heat generating means, and then said objects to be bonded are bonded by using said sealing material having been melted.

11. A method of bonding objects to be bonded by using a microwave heating apparatus, wherein an object to be bonded is a glass tube having been sealed at one end thereof and filled with a predetermined substance, said glass tube filled with said predetermined substance is disposed at a predetermined distance position from said heat generating means or at a position covered by said heat generating means in said hermetically sealed chamber, said glass tube is melted at the predetermined position, and the melted portion thereof is bonded to hermetically seal said glass tube.

12. A method of bonding objects to be bonded by using a microwave heating apparatus in accordance with claim 11, wherein said predetermined substance is mercury, metal and/or metal halide.

13. A method of bonding objects to be bonded by using a microwave heating apparatus in accordance with claim 10, wherein said objects to be bonded are a quartz glass tube and a metal member, said sealing material to be melted is a graded material having gradually different thermal expansion coefficients depending on the area thereof, and said metal member and said graded material are disposed in said quartz glass tube so that one side thereof having a smaller thermal expansion coefficient makes contact with said quartz glass tube and so that the other side having a larger thermal expansion coefficient makes contact with said metal member.

14. A method of bonding objects to be bonded by using a microwave heating apparatus in accordance with claim 13, wherein said graded material is a graded glass piece having a thermal expansion coefficient of (1 to 8) × 10⁻⁷/°C on said side making contact with said quartz glass tube and having a thermal expansion coefficient of (10 to 100) × 10⁻⁷/°C on said other side making contact with said metal member.

15. A method of bonding objects to be bonded by using a microwave heating apparatus in accordance with any one of claims 7 to 14, wherein said bonding objects is constituted with such material through which a microwave transmits.

16. A method of bonding objects to be bonded by using a microwave heating apparatus in accordance with any one of claims 7 to 14, said bonding objects is constituted with such material which has a lower melting point than that of said heat generating means.

17. A method of bonding objects to be bonded by using a microwave heating apparatus in accordance with any one of claims 7 to 16, wherein the heat generating means is cooled every when one set of the bonding objects is bonded.
